# EUROPÄISCHE PATENTSCHRIFT

(11) **EP 2 292 955 B1**
(45) Veröffentlichungstag und Bekanntmachung des Hinweises auf die Patenterteilung: **12.10.2016**
(21) Anmeldenummer: 10008500.0
(22) Anmeldetag: 14.08.2010
(51) Int. Cl.: F16K 3/26

(54) **Schieberventil**
Spool valve
Soupape à tiroir

(30) Priorität: 05.09.2009 DE 102009040350
(43) Veröffentlichungstag der Anmeldung: 09.03.2011
(73) Patentinhaber: Aventics GmbH, 30880 Laatzen (DE)
(72) Erfinder: Janietz, Ulrich, 30519 Hannover (DE); Person, Christope, 74170 Saint gervais les Bains (FR)
(74) Vertreter: Thürer, Andreas

(56) Entgegenhaltungen:
- EP-A1- 1 830 115
- DE-A1- 2 532 369
- DE-A1- 2 938 615
- DE-A1- 3 408 815

## Beschreibung

Die vorliegende Erfindung betrifft ein Schieberventil nach dem Oberbegriff des Patentanspruchs 1, insbesondere ein Pneumatikventil.

### Stand der Technik

Die vorliegende Erfindung eignet sich besonders für Mehrwegeventile, die nach der Bauart eines Schieberventils konstruiert sind. Ein Schieberventil besitzt gewöhnlich mindestens eine zentrale Schieberbohrung, in welche hiervon abgehende Kanäle axial voneinander beabstandet einmünden. Die Kanäle führen zu äußeren Ventilanschlüssen zur Vebindung mit weiterführenden Druckmittelleitungen oder dergleichen. Innerhalb der Schieberbohrung ist ein Ventilschieber längs bewegbar angeordnet. Durch ein definiertes Verstellen des Ventilschiebers längs der Schieberbohrung erfolgt ein Schalten des Fluidflusses zwischen den äußeren Anschlüssen. Nach diesem technischen Prinzip können Mehrwegeventile mit unterschiedlichen Ventilfunktionen konstruiert werden. Ein gattungsgemäßes Schieberventil geht aus der DE 197 19 767 A1 hervor.

Nachteilig an den herkömmlichen Ventilschiebergeometrien sind die begrenzten Durchlassmengen. Es ist daher wünschenswert, ein Schieberventil mit erhöhter Durchlassmenge anzugeben.

### Offenbarung der Erfindung

Die DE 29 38 615 A1 offenbart einen Steuerschieber, um einen Fluidfluss zwischen einem Druckerzeuger, vorzugsweise einer Pumpe, und einem Arbeitszylinder zu steuern. Es wird ein Umschaltschieber mit einem Gehäuse und einem Schieberkolben gezeigt, der einen unerwünschten Druckaufbau durch Leckageöl verhindern soll. An dem Schiebergehäuse sind mehrere Kanäle vorgesehen, nämlich ein Druckkanal zum Zuführen von Drucköl von einer Pumpe, zwei Zuflusskanäle zum Zuführen des Drucköls zu dem Arbeitszylinder und zwei Rücklaufkanäle zum Abführen von überflüssigem Drucköl. Der Schieberkolben weist Dichtungsabschnitte und Verbindungsabschnitte auf. Die Verbindungsabschnitte sind als Zylinder ausgeführt, die entlang einer Höhenlinie abgeschnitten sind, um den Abfluss von Leckageöl zu ermöglichen.

Erfindungsgemäß wird ein Schieberventil mit den Merkmalen des Patentanspruchs 1 vorgeschlagen. Vorteilhafte Ausgestaltungen sind Gegenstand der Unteransprüche sowie der nachfolgenden Beschreibung.

### Vorteile der Erfindung

Die Erfindung betrifft im wesentlichen die Lehre, durch eine nicht konzentrische bzw. exzentrische Anordnung des Ventilschiebers im Durchlassbereich den Strömungswiderstand zu verringern und die Durchflussmenge zu erhöhen. Der Strömungswiderstand wird durch eine geeignet exzentrische Anordnung des Ventilschiebers stärker verringert als durch eine Verringerung des Schieber- bzw. Kolbendurchmessers unter Beibehaltung der im Stand der Technik ausschließlich verwendeten Konzentrizität. Durch die exzentrische Anordnung der Durchlassbereiche des Schiebers innerhalb der ihn umgebenden Schieberbohrung wird erreicht, dass die Strömungsquerschnitte, die den Ein- und Auslassöffnungen bzw. Kanälen zugewandt sind, vergrößert werden. Somit kann ein Schieberventil mit erhöhter Durchlassmenge bereitgestellt werden, ohne dass Bohrungsquerschnitte oder Gehäuseteile vergrößert werden müssten.

Durch die exzentrische Anordnung befindet sich der Verbindungsabschnitt zu mehr als 50% auf einer Hälfte der ihm umgebenden Schieberbohrung.

In Ausgestaltung ist der wenigstens eine Verbindungsabschnitt rotationssymmetrisch, insbesondere zylinderförmig, ausgebildet. Eine derartige Form vereinfacht insbesondere die Herstellung eines Ventilschiebers, beispielsweise in Spritzgusstechnik.

Gemäß einer bevorzugten Ausgestaltung ist der wenigstens eine Verbindungsabschnitt nicht rotationssymmetrisch ausgebildet, so dass er insbesondere strömungsgünstig ausgeführt werden kann. Eine Optimierung der Form des Ventilschiebers bzw. des Kammeranschnitts kann beispielsweise unter Verwendung entsprechender Simulationssoftware erfolgen.

Zweckmäßigerweise ist der wenigstens eine Verbindungsabschnitt in einer Ventilstellung, insbesondere in der die den betreffenden Verbindungsabschnitt umgebende Schieberbohrung geöffnet ist, in einem Längsschnitt zu wenigstens 70%, 80%, 90% oder vollständig auf einer Hälfte der ihn umgebenden Schieberbohrung angeordnet. In dieser Ausgestaltung wird der andere Teil, insbesondere wenigstens eine Hälfte der Schieberbohrung als Durchlassöffnung bereitgestellt.

Ein Übergangsbereich von dem wenigstens einen Verbindungsabschnitt zu einem diesen benachbarten Dichtungsabschnitt ist vorteilhafterweise in Form eines schiefen Rotationskörpers ausgebildet. Auf diese Weise kann der Strömungswiderstand weiter optimiert werden. Als schiefer Rotationskörper kommen insbesondere ein schiefer Kegel, ein schiefes Rotationsparaboloid oder ein schiefes Rotationshyperboloid bzw. deren jeweilige Stümpfe in Frage. Bei einem schiefen Stumpf ist der Mittelpunkt der Dachfläche exzentrisch zum Mittelpunkt der Grundfläche angeordnet, wobei sich die Grundfläche in einen Dichtungsabschnitt und die Dachfläche in den Verbindungsabschnitt fortsetzt. Ein erfindungsgemäßes Schieberventil ist insbesondere als Pneumatikventil und/oder als Wegeventil ausgebildet.

Um die Exzentrität des Ventilschiebers relativ zur Schieberbohrung so zu erhalten, dass der Strömungswiderstand vermindert bleibt, ist der Ventilschieber zweckmäßigerweise verdrehsicher innerhalb der Schieberbohrung gelagert.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

### Figurenbeschreibung

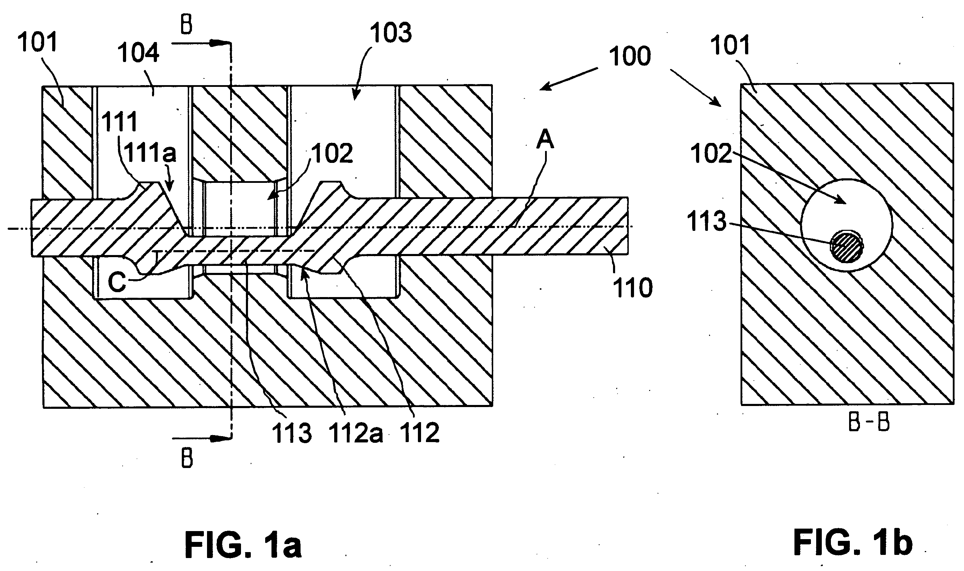

- Figur 1a: zeigt eine bevorzugte Ausgestaltung eines erfindungsgemäßen Schieberventils im Längsschnitt.
- Figur 1b: zeigt das Schieberventil gemäß Figur 1 a im Querschnitt.

Die Figuren 1a und 1b werden zusammenhängend und übergreifend beschrieben, wobei gleiche Elemente mit gleichen Bezugszeichen versehen sind. Das Ventil 100 weist ein Ventilgehäuse 101 mit einer entlang einer Längsachse A durch das Ventilgehäuse verlaufenden Schieberbohrung 102 auf. Innerhalb der Schieberbohrung 102 ist ein Ventilschieber 110 axial verschiebbar gelagert. Das Ventilgehäuse weist weiterhin einen Einlasskanal 103 sowie einen Auslasskanal 104 auf, die durch die Schieberbohrung 102 verbunden sind.

Der Ventilschieber 110 weist zwei hier als Dichtungsabschnitte 111 und 112 bezeichnete Bereiche auf, zwischen denen sich ein Verbindungsabschnitt 113 befindet. Der Verbindungsabschnitt 113 verläuft innerhalb der Schieberbohrung 102, wohingegen die Dichtungsabschnitte 111 und 112 zum Verschließen der Schieberbohrung 102 gegenüber dem Kanal 103 bzw. 104 dienen. Der Verbindungsabschnitt 113 ist rotationssymme-trisch als Zylinder ausgebildet und exzentrisch zur ihn umgebenden Schieberbohrung 102 angeordnet. Somit liegt die
Rotationsachse C des Verbindungsabschnitts 113 nicht auf der Rotationsachse A der diesen umgebenden Schieberbohrung 102.

Die Übergangsbereiche 111 a und 112a zwischen den Dichtungsabschnitten 111 bzw. 112 und dem Verbindungsabschnitt 113 sind als schiefe Rotationskörper, hier als schiefe Kegelstümpfe ausgebildet. Auf diese Weise kann der Strömungswiderstand durch das Ventil, d. h. durch den Kanal 103 die Schieberbohrung 102 und den Kanal 104, im Vergleich zu herkömmlichen, exzentrischen Ventilen verringert werden.

In der hier gezeigten Darstellung ist der Verbindungsabschnitt 113 in der gezeigten, geöffneten Ventilstellung vollständig auf der unteren Hälfte der Schieberbohrung 102 angeordnet.

Der Ventilschieber 110 ist verdrehsicher innerhalb der Schieberbohrung 102 gelagert, so dass sich der freie Querschnitt der Schieberbohrung 102 immer über der Rotationsachse A sich befindet.

Es versteht sich, dass in den dargestellten Figuren nur eine beispielhafte Ausführungsform der Erfindung dargestellt ist. Daneben ist jede andere Ausführungsform denkbar, ohne den Rahmen dieser Erfindung zu verlassen.

## Patentansprüche

1. Schieberventil mit wenigstens zwei Kanälen (103, 104) und wenigstens einer, die wenigstens zwei Kanäle (103, 104) verbindenden Schieberbohrung (102), in der ein Ventilschieber (110) mit wenigstens einem Dichtungsabschnitt (111, 112) größeren Durchmessers und wenigstens einem Verbindungsabschnitt (113) kleineren Durchmessers axial verschiebbar gelagert ist,
**dadurch gekennzeichnet, dass** wenigstens ein Verbindungsabschnitt (113) exzentrisch zur ihn umgebenden Schieberbohrung (102) angeordnet ist.

2. Schieberventil nach Anspruch 1, wobei der wenigstens eine Verbindungsabschnitt (113) rotationssymmetrisch ausgebildet ist.

3. Schieberventil nach Anspruch 2, wobei der wenigstens eine Verbindungsabschnitt (113) zylinderförmig ausgebildet ist.

4. Schieberventil nach Anspruch 1, wobei der wenigstens eine Verbindungsabschnitt nicht rotationssymmetrisch ausgebildet ist.

5. Schieberventil nach einem der vorstehenden Ansprüche, wobei der wenigstens eine Verbindungsabschnitt (113) in einer Ventilstellung in einem Längsschnitt zu wenigstens 70%, 80%, 90% oder vollständig auf einer Hälfte der ihn umgebenden Schieberbohrung (102) angeordnet ist.

6. Schieberventil nach einem der vorstehenden Ansprüche, wobei der Übergangsbereich (111a, 112a) von dem wenigstens einen Verbindungsabschnitt (113) zu einem ihm benachbarten Dichtungsabschnitt (111, 112) in Form eines schiefen Rotationskörpers ausgebildet ist.

7. Schieberventil nach Anspruch 6, wobei der Übergangsbereich (111a, 112a) in Form eines schiefen Kegel-, Rotationsparaboloid- oder Rotationshyperboloidstumpfes ausgebildet ist.

8. Schieberventil nach einem der vorstehenden Ansprüche, das als Pneumatikventil (100) ausgebildet ist.

9. Schieberventil nach einem der vorstehenden Ansprüche, das als Wegeventil (100) ausgebildet ist.

10. Schieberventil nach einem der vorstehenden Ansprüche, wobei der Ventilschieber (110) verdrehsicher innerhalb der Schieberbohrung (102) gelagert ist.

## Claims

1. A spool valve having at least two channels (103, 104) and at least one spool bore (102), which connects at least two channels (103, 104), in which a valve spool (110) with at least one sealing portion (111, 112) having a larger diameter and at least one connecting portion (113) having a smaller diameter is mounted so as to be axially movable,
**characterized in that** at least one connecting portion (113) is arranged eccentrically with respect to the spool bore (102) surrounding it.

2. The spool valve according to claim 1, wherein the at least one connecting portion (113) is rotationally symmetrical.

3. The spool valve according to claim 2, wherein the at least one connecting portion (113) is cylindrical.

4. The spool valve according to claim 1, wherein the at least one connecting portion is not rotationally symmetrical.

5. The spool valve according one of the preceding claims, wherein in a valve position in a longitudinal section the at least one connecting portion (113) is arranged with at least 70%, 80%, 90% or completely on a half of the spool bore (102) surrounding it.

6. The spool valve according to one of the preceding claims, wherein the transition region (111a, 112a) from the at least one connecting portion (113) to an adjacent sealing portion (111, 112) is in the form of an oblique rotating body.

7. The spool valve according to claim 6, wherein the transition region (111 a, 112a) is in the form of an oblique conical, rotational paraboloid or rotational hyperboloid frustum.

8. The spool valve according to one of the preceding claims, which is configured as a pneumatic valve (100).

9. The spool valve according to one of the preceding claims, which is configured as a directional valve (100).

10. The spool valve according to one of the preceding claims, wherein the valve spool (110) is mounted so as to be torsion-free inside the spool bore (102).

## Revendications

1. Soupape à tiroir avec au moins deux canaux (103, 104) et au moins un alésage de tiroir (102) reliant les au moins deux canaux (103, 104) dans lequel un tiroir de la soupape (110) avec au moins une section d'étanchéité (111, 112) d'un plus grand diamètre et au moins une section de connexion (113) d'un plus petit diamètre est logé de sorte à pouvoir être fait glisser axialement,
**caractérisé en ce qu'**au moins une section de connexion (113) est agencée excentriquement par rapport à l'alésage de tiroir (102) qui l'entoure.

2. Soupape à tiroir selon la revendication 1, l'au moins une section de connexion (113) étant de type à symétrie de révolution.

3. Soupape à tiroir selon la revendication 2, l'au moins une section de connexion (113) étant de forme cylindrique.

4. Soupape à tiroir selon la revendication 1, l'au moins une section de connexion (113) ne pas étant de type à symétrie de révolution.

5. Soupape a tiroir selon l'une des revendications précédentes, l'au moins une section de connexion (113), dans une position du tiroir dans une section longitudinale, étant agencée à au moins 70%, 80%, 90% ou complètement sur une moitié de l'alésage de tiroir (102) qui l'entoure.

6. Soupape a tiroir selon l'une des revendications précédentes, la zone de transition (111 a, 112a) de l'au moins une section de connexion (113) à une section d'étanchéité (111, 112) qui l'avoisine, ayant la forme d'un corps de révolution oblique.

7. Soupape à tiroir selon la revendication 6, la zone de transition (111a, 112a) ayant la forme d'un tronc oblique de cône, de paraboloïde de révolution ou d'hyperboloïde de révolution.

8. Soupape à tiroir selon l'une des revendications précédentes qui est réalisé sous forme de soupape pneumatique (100).

9. Soupape à tiroir selon l'une des revendications précédentes qui est réalisé sous forme de soupape (100).

10. Soupape à tiroir selon l'une des revendications précédentes, le tiroir de la soupape (110) étant logé au sein de l'alésage de tiroir (102) de sorte à ne pas pouvoir tourner.
